# FASCICULE DE BREVET EUROPEEN

(11) **EP 3 038 791 B1**
(45) Date de publication et mention de la délivrance du brevet: **16.11.2022**
(21) Numéro de dépôt: 14786975.4
(22) Date de dépôt: 22.08.2014
(51) Int. Cl.: B23P 15/04, F01D 5/28, F01D 5/14, F04D 29/02, B21K 3/04, F04D 29/32, B21D 53/78

(54) **PROCÉDÉ DE FABRICATION D'UN BORD DE RENFORCEMENT D'AUBE**
VERFAHREN ZUR HERSTELLUNG EINER SCHAUFELVERSTÄRKUNGSKANTE
METHOD FOR PRODUCING A BLADE REINFORCING EDGE

(30) Priorité: 29.08.2013 FR 1358272
(43) Date de publication de la demande: 06.07.2016
(73) Titulaire: Safran Aircraft Engines, 75015 Paris (FR)
(72) Inventeur: KLEIN, Gilles, Charles, Casimir, F-77550 Moissy-Cramayel Cedex (FR); THAM, Léon, F-77550 Moissy-Cramayel Cedex (FR)
(74) Mandataire: Cabinet Beau de Loménie
(86) Numéro de dépôt international: PCT/FR2014/052112
(87) Numéro de publication internationale: WO 2015/028749

(56) Documents cités:
- EP-A1- 1 707 923
- EP-A2- 2 469 025
- FR-A1- 2 956 602
- FR-A1- 2 961 866
- FR-A1- 2 970 668
- JP-A- 2010 255 451
- US-A1- 2002 068 108

## Description

### DOMAINE DE L'INVENTION

Le présent exposé concerne un procédé de fabrication d'une pièce, selon le préambule de la revendication 1. Un tel procédé est connu du document FR 2 970 668 A1.

Plus particulièrement, ladite pièce peut être un bord de renforcement d'aube de turbomachine. Un tel bord de renforcement peut équiper tout type de turbomachine, terrestre ou aéronautique, et notamment un turbomoteur d'hélicoptère ou un turboréacteur d'avion.

### ARRIERE-PLAN

Les aubes de turbomachine subissent d'importantes contraintes mécaniques, liées notamment à leur vitesse de rotation, tout en devant satisfaire à des conditions strictes de masse et d'encombrement. L'une des options envisagées pour alléger les aubes est l'utilisation de matériau composite pour leur fabrication. Cependant, les aubes de turbomachine doivent également répondre à des critères sévères d'utilisation et, notamment, résister aux impacts de corps étrangers et à l'abrasion. Par exemple, une aube de soufflante avant d'un turboréacteur d'avion doit résister aux impacts des oiseaux percutés en vol et à l'abrasion en vol. Or, lorsque le bord d'attaque d'une aube est réalisé dans le même matériau composite que le corps de l'aube, ce bord d'attaque risque de présenter une résistance insuffisante à l'impact et à l'abrasion.

Pour pallier ce problème, il a été envisagé de consolider l'aube au niveau de son bord d'attaque en utilisant une pièce rapportée sur le corps de l'aube, qui s'intègre au profil aérodynamique de l'aube. Une telle pièce rapportée est appelée bord de renforcement.

Un bord de renforcement est généralement une pièce massive s'étendant longitudinalement suivant une direction sensiblement radiale par rapport à l'axe de rotation de la turbomachine, et présentant, en section transversale, un profil de forme générale en "Y" avec une portion centrale d'épaisseur importante entourée par des branches effilées. Le bord de renforcement présente ainsi une partie centrale longitudinale d'épaisseur importante, appelée "nez", bordée par des flancs longitudinaux amincis.

L'épaisseur d'un tel bord de renforcement est donc variable, allant typiquement de plusieurs millimètres dans la portion centrale à quelques dixièmes de millimètre seulement (de l'ordre de 0,2 mm) à l'extrémité des branches effilées.

Un bord de renforcement peut être utilisé pour renforcer le bord d'attaque ou le bord de fuite d'une aube. Il doit donc présenter une géométrie adaptée à sa localisation, par exemple une forme vrillée et cambrée, complémentaire de celle du bord du corps d'aube sur lequel il est fixé.

Enfin, un bord de renforcement doit présenter, sur sa face externe, un état de surface lisse pour ne pas nuire aux propriétés aérodynamiques de l'aube et, sur sa face interne, une bonne qualité de rayon de courbure pour épouser parfaitement le bord du corps d'aube sur lequel il est fixé.

Il est connu, par exemple par la demande de brevet FR 2 961 866, de fabriquer des bords de renforcement par mise en forme à chaud, y compris forgeage à l'aide d'un outillage poinçon/matrice, et usinage d'une pièce en alliage de titane. Le bord de renforcement est ensuite assemblé au corps d'aube, généralement par collage, pour former une aube. Cependant, l'aube ainsi obtenue peut présenter une cohésion insuffisante. Dans ce cas, les sollicitations auxquelles est soumise l'aube peuvent entraîner la séparation du bord de renforcement et du corps d'aube.

Il existe donc un réel besoin pour un procédé de fabrication permettant de fabriquer un bord de renforcement d'aube de turbomachine qui présente une faculté de cohésion accrue avec le corps d'aube.

### PRESENTATION DE L'INVENTION

Le présent exposé concerne un procédé de fabrication d'un bord de renforcement d'une aube de turbomachine défini par la revendication 1. Des mises en œuvre préférés du procédé sont décrits dans les revendications dépendantes.

L'ébauche du bord de renforcement peut être forgée ou usinée avant ou après l'étape d'impression d'empreinte. Ce forgeage ou usinage peut comprendre des étapes de cambrage, de bourrage, de filage, ou une combinaison quelconque de ces trois opérations. L'ébauche est généralement une pièce en alliage de titane.

Dans le présent exposé, on appelle surface rugueuse la surface spécifiquement modifiée par l'étape d'impression d'empreinte. Ainsi, la surface rugueuse désigne exclusivement la surface imprimée, bien que l'ébauche puisse présenter d'autres surfaces, non-imprimées, ayant une certaine rugosité par ailleurs. Lorsque l'ébauche est imprimée en plusieurs endroits, la surface rugueuse peut également désigner une réunion de surfaces imprimées, que ces surfaces soient contiguës ou non.

La surface rugueuse est la surface destinée à être assemblée à un corps d'aube, par exemple collée, une fois l'ébauche complètement mise en forme pour obtenir un bord de renforcement. Ainsi, le procédé permet d'optimiser l'état de surface de l'ébauche au niveau de sa partie destinée à être collée, c'est-à-dire au niveau de la surface rugueuse, afin d'améliorer sa cohésion avec le corps d'aube. La résistance de l'aube aux sollicitations du bord de renforcement est donc accrue grâce à ce procédé.

De plus, en raison de son petit nombre d'étapes, ce procédé peut être facilement intégré à une chaîne de production. Sa mise en œuvre industrielle est donc peu onéreuse.

Le procédé comporte une étape supplémentaire consistant à déformer au moins la surface rugueuse de l'ébauche de façon à obtenir la forme finale du bord de renforcement.

Dans de tels modes de réalisation, la déformation de la surface rugueuse a lieu après l'étape d'impression d'empreinte. Le procédé est donc particulièrement intéressant pour des bords de renforcement qui sont tels qu'on ne pourrait pas imprimer une surface rugueuse une fois qu'ils ont pris leur forme finale.

L'ébauche a un profil de forme générale en Y.

L'ébauche s'étend donc selon une direction longitudinale, et son profil est vu transversalement à cette direction. Le profil de l'ébauche peut comprendre une base centrale épaisse à partir de laquelle s'étendent deux branches généralement effilées. La base centrale peut présenter une ou plusieurs courbures par rapport à la direction longitudinale.

La surface rugueuse se situe à l'intérieur de l'ébauche.

L'intérieur de l'ébauche désigne la surface destinée à être au contact du corps d'aube, lequel vient généralement se loger à l'intérieur d'un renfoncement prévu dans le bord de renforcement. Dans le cas où l'ébauche a un profil de forme générale en Y, l'intérieur de l'ébauche désigne la surface située entre les branches supérieures du Y, c'est-à-dire la surface définie par les côtés des branches du Y qui se font face.

La surface rugueuse est imprimée à l'intérieur de l'ébauche en Y et les branches de l'ébauche sont ensuite déformées et/ou rapprochées l'une de l'autre. Grâce à un tel procédé, l'étape d'impression d'empreinte est réalisée alors que les branches sont suffisamment écartées et qu'il est relativement simple de faire passer un outil d'impression. Dans certains cas, après rapprochement des branches, la zone comportant la surface rugueuse peut être inaccessible aux outils d'usinage et l'impression d'empreinte impossible.

L'étape d'impression est effectuée par matriçage entre une première matrice et une deuxième matrice, au moins l'une de ces deux matrices comportant un poinçon configuré pour imprimer ladite empreinte.

Dans ces modes de réalisation, le poinçon est prévu du côté de la surface de l'ébauche sur laquelle l'empreinte doit être imprimée. Le poinçon possède donc une empreinte complémentaire de l'empreinte souhaitée sur la surface rugueuse. En particulier, le poinçon peut présenter une certaine rugosité permettant d'obtenir la rugosité voulue sur la surface rugueuse. La rugosité du poinçon peut être sensiblement égale à la rugosité souhaitée pour la surface rugueuse.

La rugosité de la surface rugueuse est créée par la rugosité initiale de l'ébauche, par transfert de la rugosité du poinçon, et par des aléas du matriçage (perte de rugosité à l'impression, caractéristiques des matériaux, etc.).

D'autres méthodes d'impression, telles que l'usinage chimique, couvrent une gamme de rugosités restreinte et nécessitent une préparation de l'ébauche afin de protéger les surfaces qu'on ne veut pas imprimer. Par contraste, le matriçage permet de réaliser une impression d'empreinte de manière sélective et localisée, sans avoir à protéger les autres surfaces de l'ébauche.

Les rugosités pouvant être atteintes par le matriçage couvrent des plages étendues. En outre, une fois le poinçon réalisé, le matriçage est une opération plus rapide, plus répétitive et moins coûteuse que l'usinage chimique.

Dans certains modes de réalisation, la rugosité de la surface rugueuse est comprise entre 1 et 20, de préférence entre 3 et 10.

Dans le présent exposé, on entend désigner par « rugosité » la grandeur répondant à la définition suivante. Des profils de la surface rugueuse sont obtenus par la coupe de ladite surface par un plan, et la rugosité de la surface rugueuse est définie comme la moyenne des rugosités des profils de ladite surface. La rugosité d'un profil est définie par l'écart moyen arithmétique par rapport à la ligne moyenne, souvent noté Ra. La valeur Ra est égale à la moyenne arithmétique, calculée sur une longueur d'évaluation définie sur laquelle le profil est continu, des valeurs absolues des distances entre chaque point du profil continu et une ligne moyenne dudit profil sur la longueur d'évaluation considérée. Par convention, les valeurs de la rugosité Ra sont exprimées en micromètres (µm) et leur unité n'est pas notée.

Les plages de valeurs précitées assurent un état de surface optimal pour la surface rugueuse, en prévision de son assemblage avec un corps d'aube.

Le présent exposé concerne également un procédé de fabrication d'une aube de turbomachine, dans lequel :
- on fournit un bord de renforcement réalisé à l'aide du procédé de fabrication précité ;
- on fournit un corps d'une aube ;
- on colle tout ou partie de la surface rugueuse du bord de renforcement sur le corps d'aube.

Une aube de turbomachine fabriquée selon ce procédé peut évidemment comprendre un ou plusieurs bords de renforcement. Par exemple, elle peut comprendre deux bords de renforcement, l'un faisant office de bord d'attaque et l'autre de bord de fuite.

Une aube de turbomachine fabriquée selon ce procédé est particulièrement robuste aux sollicitations de tout type, notamment mécaniques. Elle présente une cohésion accrue entre son bord de renforcement et son corps d'aube.

Dans certains modes de réalisation, le corps d'aube est en matériau composite à matrice organique. Il peut s'agir, par exemple, d'un corps d'aube composite obtenu par drapage d'un matériau tissé ou par tissage tridimensionnel. Toujours à titre d'exemple, le matériau composite utilisé peut être composé par un assemblage de fibres de carbone/plastique tissées et d'une matrice résineuse (par exemple une matrice de résine époxy, bismaléimide ou cyanate-ester), l'ensemble pouvant être formé par moulage au moyen d'un procédé d'injection de résine sous vide de type RTM (pour « Resin Transfer Molding »).

Le présent exposé décrit également, sans le revendiquer en tant que tel, un bord de renforcement d'aube de turbomachine comprenant une surface, notamment une surface intérieure, dont la rugosité est comprise entre 1 et 20, de préférence entre 3 et 10.

Un tel bord de renforcement présente donc une surface rugueuse particulièrement adaptée pour son assemblage sur un corps d'aube, comme expliqué précédemment.

Le bord de renforcement peut présenter un profil en Y tel que défini précédemment. La surface rugueuse peut se trouver à l'intérieur du bord de renforcement, c'est-à-dire que la surface rugueuse peut correspondre en totalité ou en partie à la surface intérieure du bord de renforcement.

Le présent exposé décrit également, sans la revendiquer en tant que telle, une aube de turbomachine comprenant un bord de renforcement tel que précédemment décrit. Une telle aube de turbomachine est particulièrement résistante aux sollicitations de tout type, notamment mécaniques. Elle présente une cohésion accrue entre le bord de renforcement et le corps d'aube qui la constituent.

### BREVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 est une vue en perspective d'une ébauche de bord de renforcement ;
- la figure 2 représente de façon schématique l'étape d'impression d'empreinte sur l'ébauche ;
- la figure 3 est une vue en perspective d'un bord de renforcement après déformation ;
- la figure 4 est une vue partielle, en coupe, d'une aube de turbomachine.

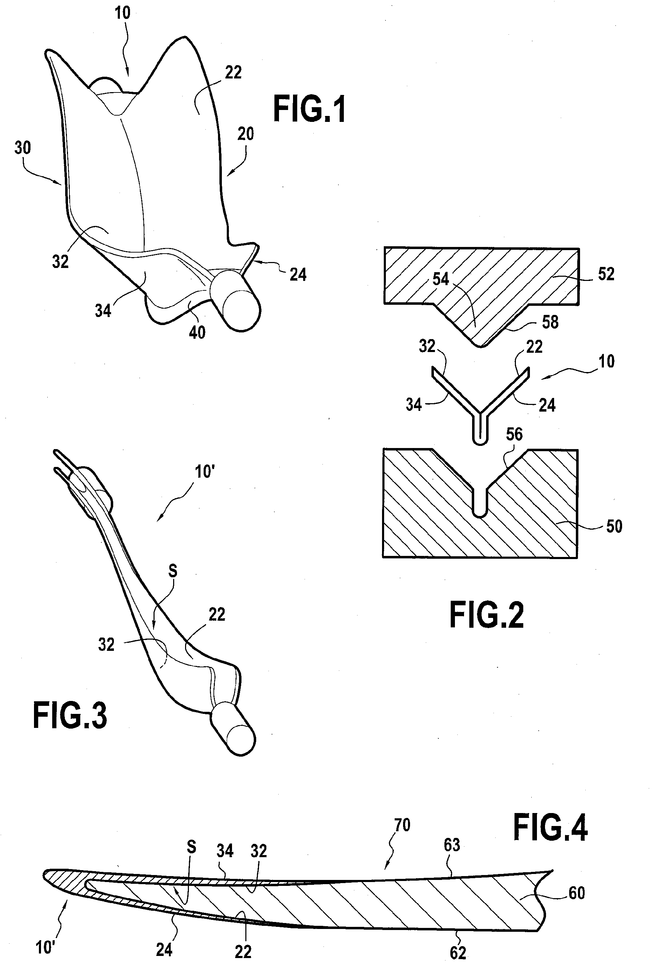

La figure 1 représente en perspective un exemple d'une ébauche 10 utilisée pour fabriquer un bord de renforcement. Dans cet exemple, l'ébauche 10 a une forme générale en Y. Elle comporte en l'occurrence une portion centrale 40 d'épaisseur importante et deux branches 20, 30 effilées, d'épaisseur moins importante. La portion centrale 40 s'étend selon une direction longitudinale. Elle peut présenter une ou plusieurs courbures selon cette direction longitudinale. La branche droite 20 et la branche gauche 30 s'étendent à partir de la portion centrale 40. L'orientation droite et gauche est donnée uniquement en fonction des dessins, pour des raisons de clarté, et ne présage en rien du sens d'utilisation final de l'ébauche.

La branche droite 20 et la branche gauche 30 comportent chacune une face intérieure 22, 32 et une face extérieure 24, 34. Les faces intérieures 22, 32 se font face ; en d'autres termes, les faces intérieures 22, 32 forment entre elles un angle inférieur saillant, c'est-à-dire un angle inférieur à 180°.

Au cours du procédé de fabrication du bord de renforcement, une surface rugueuse est imprimée sur l'ébauche 10. Cette impression s'effectue par matriçage. Une telle étape de matriçage est schématisée sur la figure 2. L'ébauche 10 est placée entre une première matrice 50 et une deuxième matrice 52. La première matrice 50 comporte une première surface d'appui 56 dont la forme est complémentaire de la forme des faces extérieures 24, 34 et de la portion centrale 40 de l'ébauche. La deuxième matrice 52 comprend un poinçon 54, lequel est délimité par une deuxième surface d'appui 58 dont la forme est complémentaire de la forme des faces intérieures 22, 32. Ainsi, lorsque les matrices 50, 52 sont rapprochées l'une de l'autre pour enserrer l'ébauche 10, la forme globale de l'ébauche 10 n'est pas modifiée.

Dans ce mode de réalisation, la deuxième surface d'appui 58 du poinçon 54 possède une empreinte complémentaire de l'empreinte que l'on souhaite transférer par impression à l'intérieur de l'ébauche. L'intérieur de l'ébauche désigne ici tout ou partie des faces intérieures 22, 32. Par exemple, l'empreinte de la deuxième surface d'appui 58 peut être simplement une surface de rugosité choisie. Par ailleurs, il est évident que si l'on souhaite imprimer une empreinte à l'extérieur de l'ébauche 10, par exemple sur les faces externes 24, 34, alors c'est la première surface d'appui 56 et non la deuxième surface d'appui 58 qui doit présenter une empreinte adéquate.

De préférence, l'étape de matriçage de l'ébauche 10 est effectuée à chaud, c'est-à-dire qu'au moment du matriçage, l'ébauche 10 est à une température suffisamment élevée pour que le transfert de l'impression d'empreinte puisse être facilité. Dans le cas d'un alliage de titane, la température visée à cette étape est par exemple de l'ordre de 600°C.

Par exemple, le poinçon 54 peut être conçu amovible, de sorte qu'il suffise de changer de poinçon sur une même matrice pour changer le type d'empreinte ou la valeur de la rugosité imprimée.

En outre, la préparation de la surface du poinçon 54 peut être réalisée par fraisage, en particulier à l'aide d'une fraise boule. Dans ce cas, le réglage du pas de fraisage dimensionne la rugosité désirée. A l'issue de l'étape de matriçage, la forme globale de l'ébauche 10 n'est pas modifiée mais l'ébauche 10 présente, sur tout ou partie de ses faces intérieures 22, 32, une surface rugueuse S. La surface rugueuse S, imprimée par la deuxième surface d'appui 58 du poinçon 54, présente la rugosité souhaitée.

Ensuite, on déforme l'ébauche 10 pour qu'elle atteigne sa configuration finale de bord de renforcement 10'. Un tel bord de renforcement 10' est représenté sur la figure 3. En l'occurrence, les parties déformées de l'ébauche incluent la surface rugueuse S portée par les faces intérieures 22, 32. Les procédés de déformation pouvant être employés sont bien connus de l'homme du métier.

Après déformation, les faces intérieures 22, 32 peuvent être plus rapprochées l'une de l'autre qu'elles ne l'étaient dans l'ébauche d'origine (cf. figure 1). Dans l'exemple de la figure 3, elles sont presque parallèles. L'espace défini entre les faces intérieures 22, 32 est réduit, c'est pourquoi on désigne parfois comme « fermeture » une telle opération de déformation. De plus, le bord de renforcement 10' est sensiblement plus cambré et vrillé, dans la direction longitudinale, que ne l'était l'ébauche 10.

On notera qu'il aurait été difficile d'effectuer l'étape de matriçage décrite précédemment si l'ébauche 10 avait eu la forme finale du bord de renforcement 10', au moins pour les raisons suivantes : d'une part, en supposant que l'insertion d'un poinçon 54 à l'intérieur de l'ébauche 10 aurait été possible malgré l'étroitesse de l'intérieur de l'ébauche, il aurait fallu prévoir un poinçon 54 fin et cambré, dont la construction aurait été délicate. D'autre part, dans la mesure où la force exercée pour le matriçage ne fait effet que par sa composante localement normale à la surface de l'ébauche 10, il aurait fallu prévoir des forces d'appui d'autant plus importantes que l'ébauche 10 a un profil fermé, c'est-à-dire d'autant plus importantes que les branches 20, 30 sont proches l'une de l'autre.

La fabrication d'une aube de turbomachine peut comprendre la fourniture d'un bord de renforcement 10' fabriqué selon le procédé décrit précédemment. Par exemple, ce bord de renforcement 10' peut être un bord d'attaque. Comme le montre la figure 4, qui présente une vue en coupe partielle d'une aube 70 de turbomachine, ce bord de renforcement est ensuite assemblé à un corps d'aube 60 configuré pour l'accueillir. En d'autres termes, la forme externe du corps d'aube 60 peut être complémentaire de la forme des faces internes 22, 32 du bord de renforcement 10' pour que les deux s'assemblent parfaitement. L'assemblage est réalisé au niveau de la surface rugueuse S, et peut notamment être réalisé par collage.

Plus précisément, le corps d'aube 60 comprend une face d'extrados 62 et une face d'intrados 63. La surface intérieure droite 22 est collée, au niveau de la surface rugueuse S, sur la face d'extrados 62, tandis que la surface intérieure gauche 32 est collée, au niveau de la surface rugueuse S, sur la face d'intrados 63. La rugosité de la surface rugueuse S assure une cohésion optimale du collage entre le bord de renforcement 10' et le corps d'aube 60.

Bien que la présente invention ait été décrite en se référant à des exemples de réalisation spécifiques, des modifications peuvent être apportées à ces exemples sans sortir de la portée générale de l'invention telle que définie par les revendications.

## Revendications

1. Procédé de fabrication d'un bord de renforcement (10') d'une aube de turbomachine (70), dans lequel :
- on fournit une ébauche (10) du bord de renforcement, l'ébauche (10) ayant un profil de forme générale en Y;
- on imprime une empreinte sur ladite ébauche (10) de manière à former une surface rugueuse (S) à l'intérieur de l'ébauche (10), **caractérisé en ce que** l'impression est faite par matriçage entre une première matrice (50) et une deuxième matrice (52), au moins l'une de ces deux matrices comportant un poinçon (54) configuré pour imprimer ladite empreinte, et **en ce qu'**il comporte une étape supplémentaire consistant à déformer au moins la surface rugueuse (S) de l'ébauche (10) de façon à obtenir la forme finale du bord de renforcement (10').

2. Procédé de fabrication selon la revendication 1, dans lequel la rugosité (Ra)
de la surface rugueuse (S) est comprise entre 1 et 20, de préférence entre 3 et 10.

3. Procédé de fabrication selon la revendication 1 ou 2, dans lequel l'impression de ladite empreinte ne modifie pas la forme globale de l'ébauche (10)

4. Procédé de fabrication d'une aube de turbomachine, dans lequel :
- on fournit un bord de renforcement (10') réalisé à l'aide du procédé de fabrication selon l'une quelconque des revendications 1 à 3 ;
- on fournit un corps d'aube (60) ;
- on colle tout ou partie de la surface rugueuse (S) du bord de renforcement (10') sur le corps d'aube (60).

5. Procédé de fabrication selon la revendication 4, dans lequel le corps d'aube (60) est en matériau composite à matrice organique.

## Patentansprüche

1. Verfahren zur Herstellung einer Verstärkungskante (10') einer Schaufel einer Turbomaschine (70), wobei:
- ein Rohling (10) der Verstärkungskante bereitgestellt wird, wobei der Rohling (10) ein allgemeines Y-Profil hat;
- ein Abdruck auf den Rohling (10) gedruckt wird, so dass eine raue Oberfläche (S) im Inneren des Rohlings (10) entsteht, **dadurch gekennzeichnet, dass** der Druck durch Prägen zwischen einer ersten Matrix (50) und einer zweiten Matrix (52) erfolgt, wobei mindestens eine dieser zwei Matrizes einen Stempel (54) aufweist, der ausgelegt ist, um den Abdruck zu drucken, und dass es einen zusätzlichen Schritt aufweist, der darin besteht, mindestens die raue Oberfläche (S) des Rohlings (10) derart zu verformen, dass die endgültige Form der Verstärkungskante (10') erhalten wird.

2. Herstellungsverfahren nach Anspruch 1, wobei die Rauigkeit (Ra) der rauen Oberfläche (S) zwischen 1 und 20, vorzugsweise zwischen 3 und 10, liegt.

3. Herstellungsverfahren nach Anspruch 1 oder 2, wobei der Druck des Abdrucks die allgemeine Form des Rohlings (10) nicht verändert.

4. Verfahren zur Herstellung einer Schaufel einer Turbomaschine, wobei:
- eine Verstärkungskante (10') bereitgestellt wird, die mit Hilfe des Herstellungsverfahrens nach einem der Ansprüche 1 bis 3 hergestellt wurde;
- ein Schaufelkörper (60) bereitgestellt wird;
- die gesamte oder ein Teil der rauen Oberfläche (S) der Verstärkungskante (10') auf den Schaufelkörper (60) geklebt wird.

5. Herstellungsverfahren nach Anspruch 4, wobei der Schaufelkörper (60) aus Kompositmaterial mit organischer Matrix ist.

## Claims

1. A fabrication method for fabricating a reinforcing edge (10') of a turbine engine blade (70), the method comprising:
• providing a blank (10) for the reinforcing edge, wherein the blank (10) has a profile that is generally Y-shaped;
• imprinting an indentation in said blank (10) so as to form a rough surface (S) on the inside of the blank (10), **characterized in that** the imprinting is carried out by die-stamping between a first die (50) and a second die (52), at least one of the two dies including a punch (54) configured to imprint said indentation, and **in that** it includes an additional step consisting in deforming at least the rough surface (S) of the blank (10) so as to obtain the final shape of the reinforcing edge (10').

2. A fabrication method according to claim 1, wherein the roughness (Ra) of the rough surface (S) lies in the range 1 to 20, preferably in the range 3 to 10.

3. A fabrication method according to claim 1 or 2, wherein the imprinting does not change the overall shape of the blank (10).

4. A fabrication method for fabricating a turbine engine blade, the method comprising:
• providing a reinforcing edge (10') made using the fabrication method according to any one of claims 1 to 3;
• providing a blade body (60); and
• adhesively bonding all or part of the rough surface (S) of the reinforcing edge (10') to the blade body (60).

5. A fabrication method according to claim 4, wherein the blade body (60) is made of organic matrix composite material.
